# EUROPEAN PATENT APPLICATION

(11) **EP 4 703 860 A1**
(43) Date of publication of application: **04.03.2026**
(21) Application number: 25166549.3
(22) Date of filing: 27.03.2025
(51) Int. Cl.: G06F 3/04847, B60K 35/10, B60K 35/22, G06F 3/0487, G06F 3/04886

(54) **AUTOMOTIVE DISPLAY CONTROL DEVICE**

(30) Priority: 02.09.2024 KR 20240118433
(71) Applicant: Hyundai Mobis Co., Ltd., Gangnam-gu Seoul 06141 (KR)
(72) Inventor: PECK, Soo Jin, 16891 Yongin-si, Gyeonggi-do (KR); KIM, Shin Yeong, 16891 Yongin-si, Gyeonggi-do (KR); KIM, Jae Min, 16891 Yongin-si, Gyeonggi-do (KR); KIM, Tae Hun, 16891 Yongin-si, Gyeonggi-do (KR); KIM, Seung Jae, 16891 Yongin-si, Gyeonggi-do (KR); KIM, Kyung Hoon, 16891 Yongin-si, Gyeonggi-do (KR); CHOI, Myung Bin, 16891 Yongin-si, Gyeonggi-do (KR)
(74) Representative: Jung, Minkyu

(57) **Abstract**

An automotive display control device according to one embodiment includes a display configured to display a plurality of windows and sense a touch, and a transparent knob which is located on a surface of the display and sense a touch, wherein the display includes a knob activation area located to at least partially overlap the transparent knob, the window is displayed to overlap the knob activation area, and the transparent knob provides a control function corresponding to a function of the window covering the knob activation area.

## Description

### CROSS-REFERENCE TO RELATED APPLICATIONS

This application claims priority to and the benefit of Korean Patent Application No. 10-2024-0118433, filed on September 2, 2024, the disclosure of which is incorporated herein by reference in its entirety.

### TECHNICAL FIELD

The present invention relates to an automotive display control device, and more particularly, to an automotive display control device which enables various functions of a vehicle to be easily manipulated.

### BACKGROUND

Recently, vehicles are provided with display devices to enable various functions of the vehicles to be manipulated. However, simple application of functions of a vehicle to the vehicle through a display may cause a driver to be careless, and hence the display may be manipulated through a separate knob.

A virtual knob displayed on the display may be applied as the knob, but this has a demerit that it is difficult for a driver or passenger to manipulate the virtual knob in a moving vehicle. This is because the driver or passenger in the vehicle needs to ensure stability of vehicle driving by reducing the time the driver or passenger needs to look at the display. It may not be easy to determine which function among various functions displayed on the display the knob is linked in a situation in which a user does not concentrate his/her attention on the display. Therefore, a knob formed to have the structure of a knob and that is easily manipulated is required.

### SUMMARY

One embodiment of the present invention is directed to an automative display control device which enables multiple functions to be controlled using a single knob and enables a user to easily recognize a control situation.

The technical problems of the present specification are not limited to the above-mentioned technical problems, and other technical problems which are not mentioned will be clearly understood by those skilled in the art from the following description.

According to an aspect of the present invention, there is provided an automotive display control device including: a display configured to display a plurality of windows and recognize a touch; and a transparent knob located on a surface of the display, the transparent knob recognizing a touch, wherein the display includes a knob activation area located to at least partially overlap the transparent knob.

The window may be displayed to overlap the knob activation area, and the transparent knob may provide a control function corresponding to a function of the window covering the knob activation area.

A size of the window may be adjusted through a gesture of a user, and the transparent knob may be linked to the window covering the knob activation area by adjusting the size of the window.

In a case where the window linked to the transparent knob includes a plurality of functions, a function box corresponding to each function may be displayed on the window, and the transparent knob may control the function corresponding to the function box when the function box is dragged to the inside of the transparent knob.

The transparent knob may be divided into a central portion and a peripheral portion surrounding the central portion, the central portion may be a portion displaying information on a function which the transparent knob is controlling, and the peripheral portion may be a portion performing control of the function of the window linked to the transparent knob, which the user touches.

An edge of each of the central portion and the peripheral portion may be formed to protrude such that a fingertip of the user settles on the peripheral portion, and the transparent knob may be manipulated while the fingertip of the user is dragged along the peripheral portion in a state in which the fingertip of the user settles on the peripheral portion.

The window displayed on the display may be displayed to extend up to both ends of the display in a width direction, the size of the window may be adjusted by dragging an upper or lower edge of the window, and the knob activation area may partially overlap a portion at which the transparent knob is located and extend to both ends of the display in the width direction.

The transparent knob may be linked to the window in a case where the window completely covers the knob activation area by adjusting the size of the window, and the window may be restored to a state before the size of the window was adjusted in a case where the window partially covers the knob activation area.

In a case where the window covers the knob activation area by adjusting the size of the window, a haptic response may be provided to the user.

The display may include a first window, which may be an area in which information on an air conditioning mode of a vehicle is displayed, and a temperature, direction or volume of air may be adjusted through the peripheral portion when the first window and the transparent knob are linked to each other.

The display may include a second window, which is an area in which information on media is displayed, and a sound effect or image effect may be adjusted through the peripheral portion when the second window and the transparent knob are linked to each other.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating an automotive display control device according to one embodiment of the present invention;
FIG. 2 is a view illustrating a transparent knob according to one embodiment of the present invention;
FIG. 3 is a view illustrating a state in which a display displays a plurality of windows according to one embodiment of the present invention;
FIG. 4 is a view illustrating a knob activation area according to one embodiment of the present invention;
FIG. 5 is a view illustrating a state in which a window located at a side of the transparent knob is linked to the transparent knob according to one embodiment of the present invention;
FIG. 6 is a view illustrating a state in which a window located at the other side of the transparent knob is linked to the transparent knob according to one embodiment of the present invention;
FIG. 7 is a view illustrating a state in which the transparent knob is displayed when the transparent knob is linked to a window according to one embodiment of the present invention;
FIG. 8 is a view illustrating a state in which the transparent knob is linked to a window having a plurality of functions according to one embodiment of the present invention; and
FIG. 9 is a view illustrating a method of adjusting a size of a window according to one embodiment of the present invention.

### DETAILED DESCRIPTION

Various changes may be applied to the present invention, and therefore only particular examples are illustrated in detail. However, this is not intended limit the present invention to the certain form, and the present invention should be understood to include all changes and equivalent materials and replacements. In the following description, detailed explanation of known related functions and constitutions may be omitted to avoid unnecessarily obscuring the subject manner of the present invention.

It will be understood that, although the terms "first," "second," etc. may be used herein to describe various elements, these elements should not be limited by these terms. These terms are only used to distinguish one element from another element.

The technical terms used herein are used only for the purpose of illustrating a specific embodiment and not intended to limit the embodiment. As used herein, the singular forms are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence and/or addition of one or more other features, integers, steps, operations, elements, components, and/or groups thereof.

Throughout the specification, "connected" does not mean only that two or more constituent elements are directly connected, but may also mean that two or more constituent elements are indirectly connected through another constituent element, or physically connected or electrically connected, and it may include a case where substantially integral parts are connected to each other although they are referred to by different names according to positions or functions.

A component is described as being formed or arranged "on (above)" or "below (under)" another component means not only that the two components are directly in contact, but may also mean that one or more other components are formed or arranged between the two components. In addition, the expression "on (above)" or "below (under)" may include not only an upward direction but also a downward direction with respect to one component.

Hereinafter, an embodiment of an automotive display control device will be described in detail with reference to the accompanying drawings. In description with reference to the accompanying drawings, the same reference numerals will be assigned to the same or corresponding element, and repetitive description thereof will be omitted.

In a conventional vehicle, knobs or buttons for controlling each function of the vehicle were arranged as separate articles. As an example, buttons and knobs for manipulating media in the vehicle and buttons and knobs for manipulating an air conditioner in the vehicle existed separately. However, as functions provided by vehicles diversify, knobs and buttons that can control multiple functions by integrating such knobs and buttons are required. The present invention is directed to an automotive display control device which enables multiple functions to be performed using a single knob through a display and a transparent knob attached thereto.

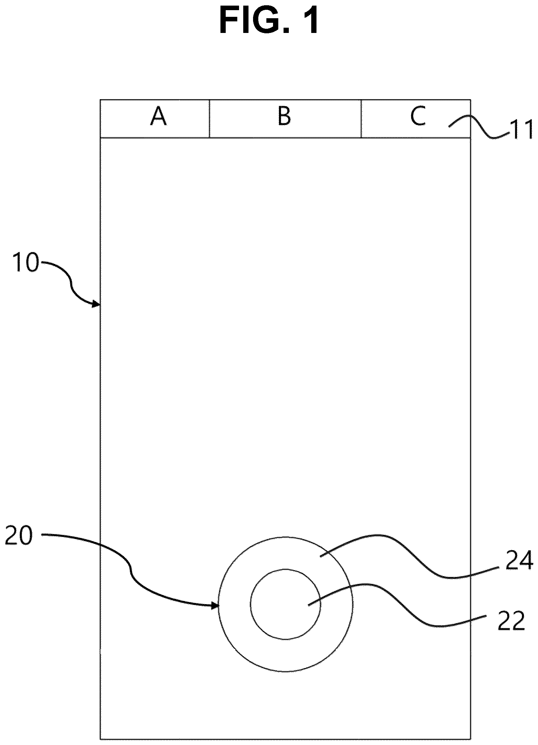

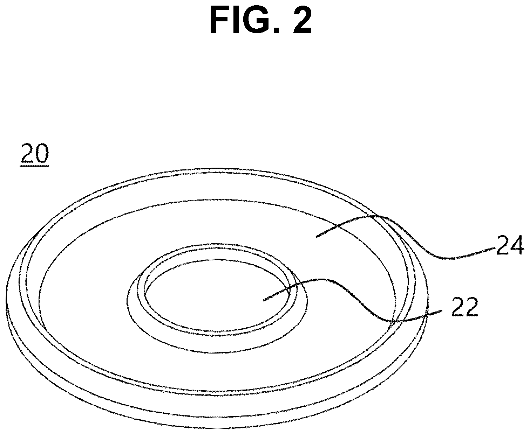

FIG. 1 is a view illustrating an automotive display control device according to one embodiment of the present invention. FIG. 2 is a view illustrating a transparent knob according to one embodiment of the present invention.

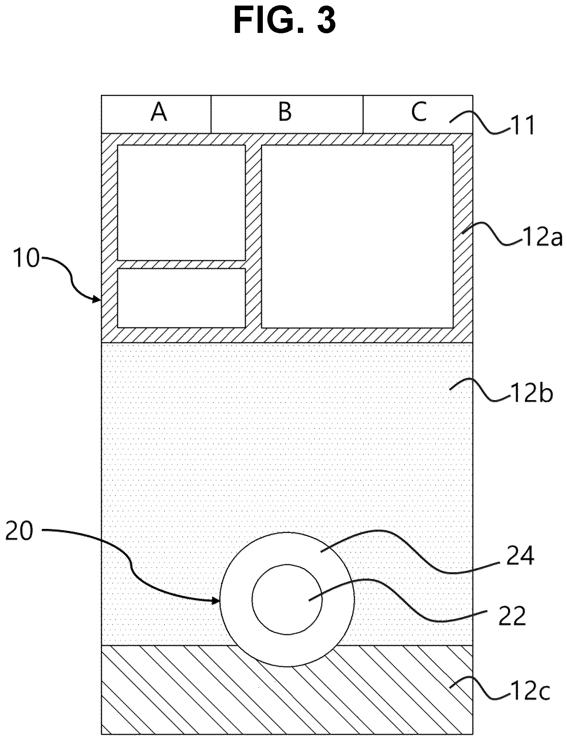

Referring to FIG. 1, the automotive display control device according to one embodiment of the present invention may include a display 10 which displays a plurality of windows 12 (see FIG. 3) and senses or recognizes user's touches thereto, and a transparent knob 20 which is located on a surface of the display 10 and senses or recognizes user's touches thereto.

A plurality of windows 12 may be displayed on the display 10. Each window 12 may display a controllable function of a vehicle. In an example, an air conditioning mode control function of the vehicle may be displayed on the window 12. In another example, a function of manipulating media may be displayed on the window 12. FIG. 1 can be seen as a state before the windows 12 are displayed on the display 10. A user may manipulate the windows 12 to be displayed on the display 10 by touching an icon displayed on the display 10 or the like. An icon or a selection box 11 similar thereto may be displayed on a side of the display 10. FIG. 1 illustrates a state in which the corresponding selection box 11 is displayed on an upper side of the display 10.

The transparent knob 20 may be attached to one surface of the display 10. The transparent knob 20 may be formed of a transparent material, so that the display 10 is exposed through the transparent knob 20. Therefore, the window 12 displayed on a portion of the display 10 at which the transparent knob 20 is located may be displayed through the transparent knob 20. Alternatively, the display 10 may be linked to the transparent knob 20, and an area corresponding to the transparent knob 20 may be displayed differently. For example, a color of the transparent knob 20 may be displayed differently from a color of another area. In other embodiments, a description of a function being controlled may be displayed to increase the intuition of the user in manipulation of the transparent knob 20.

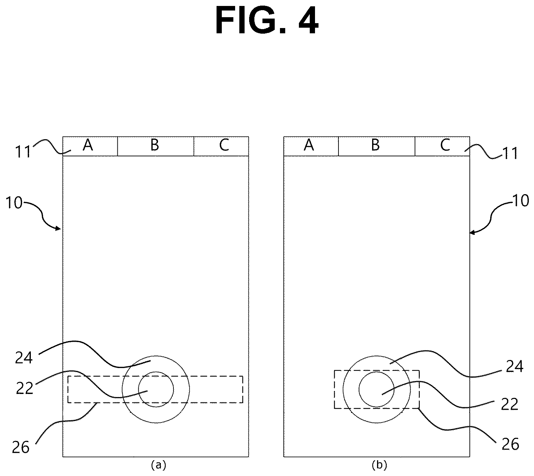

The transparent knob 20 may be linked to at least one of the plurality of windows 12. A knob activation area 26 (see FIG. 4) may be formed in the display 10. The transparent knob 20 may be linked to the window 12 overlapping the knob activation area 26. Therefore, the window 12 may be located to overlap the transparent knob 20 and the knob activation area 26. The transparent knob 20 may control a function of the window 12 linked thereto.

Although it is illustrated that the transparent knob 20 is arranged at a lower central portion of the display 10, this is merely illustrative. The position may be changed to any position in the vehicle at which the user can easily manipulate the transparent knob 20. In addition, a position of the transparent knob 20 may be changed according to the arrangement of the transparent knob 20 on the display 10. Therefore, the transparent knob 20 may be arranged at a center or an upper end portion of the display 10.

In an example, in a case where two windows 12 are displayed on the display 10, the windows 12 may include a first window and a second window. The first window may be an area in which information on an air conditioning mode of the vehicle is displayed. In a case where the first window and the transparent knob 20 are linked to each other, the user may adjust a temperature, direction, volume, or the like of air through using or manipulating the transparent knob 20.

The second window may be an area in which information on media is displayed. In a case where the second window and the transparent knob 20 are linked to each other, the user may adjust a sound effect or an image effect through using or manipulating the transparent knob 20.

Referring to FIG. 2, a structure of the transparent knob 20 is illustrated. The transparent knob 20 may include a structure in which at least a portion of the transparent knob 20 protrudes to be easily manipulated by the user. The transparent knob 20 may include a central portion 22 and a peripheral portion 24 surrounding a circumference of the central portion 22. Both the central portion 22 and the peripheral portion 24 may sense or recognize a touch, and manipulation of the transparent knob 20 may be implemented through the sensing or recognition of the touch.

The user may touch the peripheral portion 24, and manipulate the transparent knob 20 as if manipulating a dial while dragging the dial on the peripheral portion 24. An edge of each of the central portion 22 and the peripheral portion 24 may be formed to protrude. Accordingly, the user can sense or recognize the transparent knob 20 through a tactile sense. A fingertip of the user may settle on the peripheral portion 24. The edge of each of the central portion 22 and the peripheral portion 24 protrudes, and hence the fingertip may be guided toward and settle on the peripheral portion 24 formed between the protruding edges.

The protruding edge of each of the central portion 22 and the peripheral portion 24 may be formed to include a curved surface. The fingertip of the user settles on the peripheral portion 24 between the protruding edges, and hence the curved surface may be applied to reduce friction of a portion at which the fingertip and the protruding edge are in contact with each other such that the user smoothly manipulates the transparent knob 20.

FIG. 3 is a view illustrating a state in which the display displays a plurality of windows according to one embodiment of the present invention.

Referring to FIG. 3, a state in which the display 10 displays a total of three windows 12a, 12b, and 12c is illustrated. The vehicle provides various functions, and hence the display 10 may display windows 12 corresponding to the respective functions. The windows 12 may be arranged to overlap each other, and may be arranged such that boundaries of the windows 12 are in contact with each other as shown in FIG. 3.

A selection box 11 may be formed in the display 10 to display a new window 12. The selection box 11 is a portion for displaying the window 12 which is not displayed on the display 10, and may be formed in a button type in which each window 12 can be selected and displayed.

In an example, the three windows 12a, 12b, and 12c may display functions of media, a home screen, and an air conditioner, respectively. The three windows 12a, 12b, and 12c may be arranged to face each other through boundaries thereof.

FIG. 4 is a view illustrating a knob activation area according to one embodiment of the present invention.

Referring to FIG. 4, the arrangement of the knob activation area 26 according to one embodiment of the present invention is illustrated. The knob activation area 26 may be defined by a virtual line. For example, the knob activation area 26 may be invisible to the naked eye, and display the window 12 like another portion of the display 10.

The knob activation area 26 may be displayed such that at least a portion of the knob activation area 26 overlaps the transparent knob 20. The user may intuitively change a function of the transparent knob 20 by adjusting a size of the window 12 to extend the window 12 toward the transparent knob 20. The window 12 may overlap the transparent knob 20, and the transparent knob 20 may be linked to the corresponding window 12.

In this embodiment, the window 12 may extend in a lateral width direction of the display 10 to be displayed up to both side surfaces of the display 10. Therefore, only upper/lower boundaries of the window 12 may be displayed on the display 10. The user may adjust the size of the window 12 by touching and then dragging a corresponding boundary.

The knob activation area 26 may be formed to correspond to the size of the window 12. For example, as shown in FIG. 4A, the knob activation area 26 may at least partially overlap the transparent knob 20, and extend to both side surfaces of the display 10. The user may manipulate the window 12 to cover the knob activation area 26 by adjusting the size of the window 12 while vertically dragging the window 12. A center of the knob activation area 26 may correspond to a center of the transparent knob 20 such that the user can intuitively recognize that the window 12 covers the knob activation area 26.

A vertical width of the knob activation area 26 may correspond to a width of the central portion 22 such that the user clearly senses recognizes a standard that the window 12 covers the knob activation area 26. Therefore, the user may sense recognize that the transparent knob 20 is linked to the window 12 in a case where the corresponding window 12 entirely covers the central portion 22.

Alternatively, the knob activation area 26 may at least partially extend to both sides of the display 10 as shown in FIG. 4B. The window 12 may have a size to be displayed apart from both boundaries of the display 10. For example, with respect to the drawing, the size of the window 12 may be changed in a lateral direction of the display 10, or the window 12 may be moved in a lateral direction of the display 10.

The user may link the window 12 and the transparent knob 20 to each other by moving the window 12 toward the transparent knob 20 such that the knob activation area 26 and the window 12 overlap each other. The size of the transparent knob 20 is not limited. The knob activation area 26 may be formed to correspond to the central portion 22. The user may locate the window 12 to cover the central portion 22, thereby intuitively sensing or recognizing that the transparent knob 20 and the window 12 are linked to each other.

Alternatively, the knob activation area 26 may be formed in the form of a line instead of a plane. The knob activation area 26 may be formed in the form of a straight line passing through the center of the transparent knob 20. In a case where the window 12 is in contact with the corresponding straight line as the user adjusts the size of the window 12, the transparent knob 20 may be linked to the corresponding window 12.

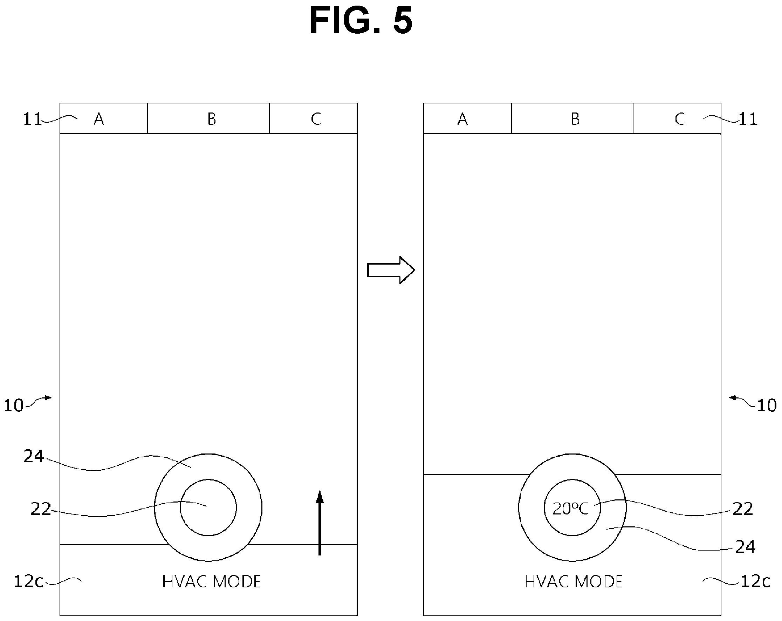

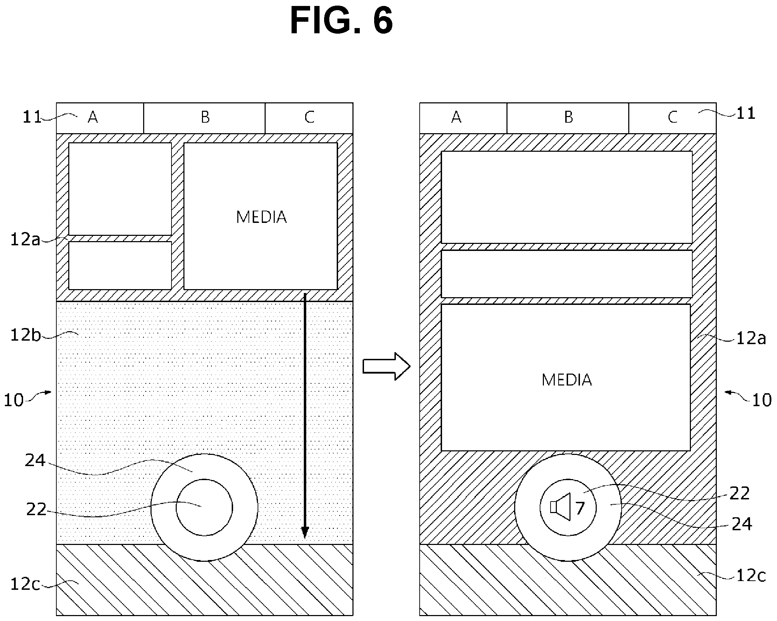

FIG. 5 is a view illustrating a state in which a window located at a side of the transparent knob is linked to the transparent knob according to one embodiment of the present invention. FIG. 6 is a view illustrating a state in which a window located at the other side of the transparent knob is linked to the transparent knob according to one embodiment of the present invention.

Referring to FIGS. 5 and 6, the user may adjust the size of the window 12 by dragging a boundary of the window 12. In a case where the size of the window 12 is adjusted such that the window 12 covers the knob activation area 26, the transparent knob 20 may be linked to the corresponding window 12.

In FIG. 5, a state in which a window 12c located on a lower side of the transparent knob 20 in the drawing is extended upward to cover the knob activation area 26 is illustrated. The window 12c shown in FIG. 5 may be a window which displays a function of the air conditioner of the vehicle. In a case where the corresponding window 12c is linked to the transparent knob 20, the function of the transparent knob 20 may be changed to control the air conditioner. The transparent knob 20 shown in FIG. 5 is thus linked to the window 12c to adjust a temperature of air discharged to the interior of the vehicle.

In FIG. 6, a state in which a window 12a located at an upper side of the transparent knob 20 in the drawing is extended downward to cover the knob activation area 26 is illustrated. The window 12a shown in FIG. 6 may be a window which displays a media function of the vehicle. In a case where the corresponding window 12a is linked to the transparent knob 20, the function of the transparent knob 20 may be changed to control media. The transparent knob 20 shown in FIG. 6 is thus linked to the window 12a to adjust a volume of reproduced media.

In a case where the user adjusts the size of the window 12 such that the window 12 covers the knob activation area 26 as shown in FIGS. 5 and 6, a haptic response may be provided to the user. The haptic response may be implemented through a vibration or effect sound of each of the display 10 and the transparent knob 20. The user may sense or recognize that the transparent knob 20 has been linked to the window 12 through the haptic response. In addition, the transparent knob 20 may notify that the transparent knob 20 has been linked to each window 12 by changing displayed content of each of the peripheral portion 24 and the central portion 22 at a moment when the transparent knob 20 is linked to the window 12. The peripheral portion 24 and the central portion 22 form a portion of a display area of the display 10, and hence the displayed content of each of the peripheral portion 24 and the central portion 22 may be changed.

In an example, a color of each of the peripheral portion 24 and the central portion 22 may be changed when the transparent knob 20 is linked to a specific window 12. In another example, gradations for controlling the transparent knob 20 may appear at an outer portion of the transparent knob 20. In the central portion 22, a function provided by the linked window 12 may be displayed as a word or symbol.

In FIG. 5, a temperature of currently discharged air is displayed on the central portion 22. Gradations for temperature values may be displayed on an outer portion of the transparent knob 20. In FIG. 6, a volume of currently reproduced media is displayed on the central portion 22. Gradations for volume values may be displayed on an outer portion of the transparent knob 20. The above display method is merely illustrative, and the transparent knob 20 may be changed according to a function of the window 12 linked thereto.

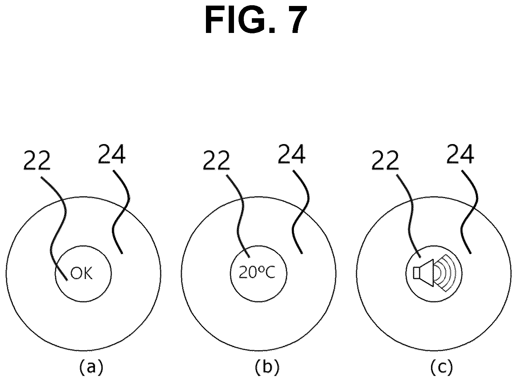

FIG. 7 is a view illustrating a state in which the transparent knob is displayed when the transparent knob is linked to the window according to one embodiment of the present invention.

FIG. 7A represents a display of the transparent knob 20 in an initial state. The transparent knob 20 may be in a state in which the transparent knob 20 is not linked to a window 12 just after the display 10 is driven, and the central portion 22 of the transparent knob 20 may operate similarly to a normal button. The word "OK" may be written in the central portion 22.

FIG. 7B corresponds to a case where the transparent knob 20 is linked to a window 12 which controls the air conditioner. A current temperature in the interior of the vehicle or a target temperature value in the interior of the vehicle may be displayed in the central portion 22 of the transparent knob 20.

FIG. 7C corresponds to a case where the transparent knob 20 is linked to a window 12 which controls media. A symbol indicating a volume may be displayed on the central portion 22 of the transparent knob 20.

As described above, displayed content of the central portion 22 is changed so that the user can sense or recognize which window 12 the transparent knob 20 has been linked to.

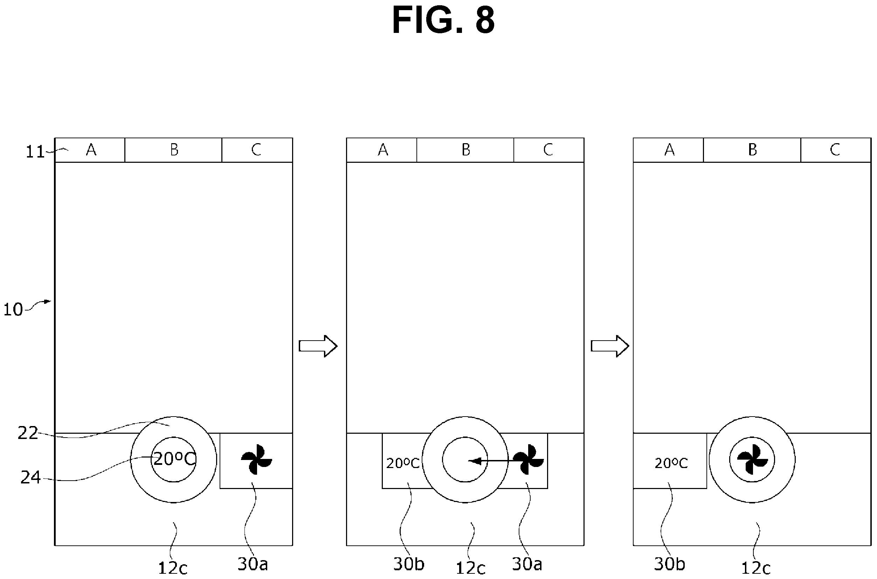

FIG. 8 is a view illustrating a state in which the transparent knob is linked to a window having a plurality of functions according to one embodiment of the present invention.

Referring to FIG. 8, in a case where the window 12 linked to the transparent knob 20 has a plurality of functions, displayed content of the transparent knob 20 may be checked. In a case where the window 12 linked to the transparent knob 20 has the plurality of functions, the user may select which function to control.

For example, a function box 30 corresponding to each of the functions of the corresponding window 12 may be displayed on the window 12. A position of the corresponding function box 30 may be adjusted while being dragged. The user may move the function box 30 to be controlled to the inside of the transparent knob 20 by dragging the function box 30. The transparent knob 20 may be changed to control a function corresponding to the corresponding function box 30.

The function boxes 30 displayed on the window 12 linked to the transparent knob 20 may be referred to as a first function box 30a and a second function box 30b. The functions corresponding to the respective function boxes 30 may be referred to as a first function and a second function. The number of function boxes 30 is not limited, and hence three or more function boxes 30 may be displayed. In a case where the user is to control the function corresponding to the first function box 30a, the user may change the transparent knob 20 to control the corresponding function by dragging the first function box 30a to the inside of the transparent knob 20.

In a case where the user is to manipulate the second function in a state in which the transparent knob 20 is changed to manipulate the first function, the user may drag the second function box 30b to the inside of the transparent knob 20. The second function box 30b may be moved to the inside of the transparent knob 20, and the first function box 30a may be moved from the inside to the outside of the transparent knob 20. This may be displayed as a motion that the first function box 30a is pushed out by the second function box 30b. After that, the transparent knob 20 may be changed to manipulate the second function.

The window 12c shown in FIG. 8 may be a window which controls the air conditioner. In the control of the air conditioner, it is required to control a plurality of functions such as a temperature and a volume of air. Referring to FIG. 8, the function box 30b on which the temperature is displayed and the function box 30a on which the symbol indicating the volume of air is displayed may be displayed inside the window 12c.

In a case where the user controls the temperature, the user may drag the function box 30a on which the temperature is displayed to the inside of the transparent knob 20, thereby changing a function such that the transparent knob 20 can manipulate the temperature. In a case where the user drags the function box 30b on which the volume of air is displayed to the inside of the transparent knob 20 in a state in which the function is changed such that the transparent knob 20 can manipulate the temperature, the function box 30a on which the temperature is displayed may be moved to the outside of the transparent knob 20, and the function box 30b on which the volume of air is displayed may be moved to the inside of the transparent knob 20. After that, the transparent knob 20 may be changed to control the volume of air.

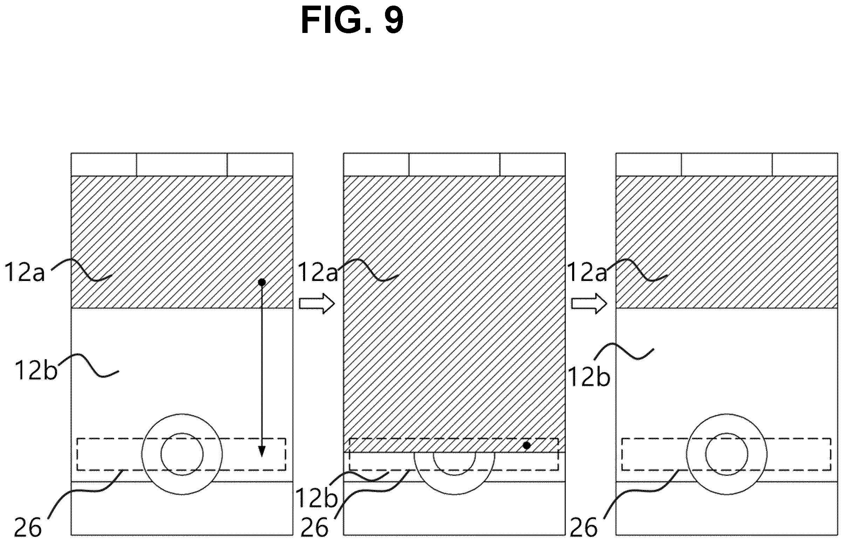

FIG. 9 is a view illustrating a method of adjusting a size of a window according to one embodiment of the present invention.

Referring to FIG. 9, a case where the window 12a according to one embodiment of the present invention covers a portion of the knob activation area 26 may be illustrated.

The transparent knob 20 may be linked to the window 12b covering the knob activation area 26. A degree to which the window 12 covers the knob activation area 26 may be changed according to a predetermined control method. In an example, the transparent knob 20 may be linked to a window 12 completely covering the knob activation area 26.

In a case where the user adjusts the size of the window 12 such that the corresponding window 12 covers only at least a portion of the knob activation area 26, the transparent knob 20 may not be linked to the corresponding window 12. The window 12 of which the size is adjusted may be maintained with the corresponding size. However, the window 12 which is not linked to the transparent knob 20 is located adjacent to the transparent knob 20, and hence the manipulation of the transparent knob 20 may be difficult.

Therefore, when the user pulls out from the display 10 in a case where the window 12a covers a portion of the knob activation area 26, the window 12a may return to a state before the size of the window 12a was adjusted. The window 12a may be restored to its size from before the size of the window 12a was adjusted, and may not be linked to the transparent knob 20. The transparent knob 20 may remain linked to the window 12b to which it was previously linked.

According to one embodiment of the present invention, a transparent knob arranged on a display can be linked to a window displayed on the display, a plurality of functions can be controlled by changing a function, and a user can easily recognize a control situation.

Various beneficial advantages and effects of the present invention are not limited to the above-described contents, and will be more easily understood in the process of describing specific embodiments of the present invention.

Although the present invention has been described in connection with the specific embodiments, it will be understood by those skilled in the art that various modifications and changes can be made thereto without departing from the spirit and scope of the present invention defined by the appended claims.

## Claims

1. An automotive display control device comprising:
a display configured to display a plurality of windows and sense a touch of a user to the display; and
a transparent knob located on a surface of the display and configured to sense a touch of the user to the transparent knob,
wherein the display comprises a knob activation area at least partially overlapping the transparent knob,
wherein the plurality of windows includes a first window displayed to overlap the knob activation area, and
wherein the transparent knob is configured to provide a control function corresponding to a function of the first window.

2. The automotive display control device of claim 1, wherein:
the display is configured to adjust a size of the first window in response to receiving a gesture of the user, and
the transparent knob is linked to the first window by adjusting the size of the first window.

3. The automotive display control device of claim 2, wherein:
when the first window linked to the transparent knob comprises a plurality of functions, the display is configured to display, on the first window, a function box corresponding to each of the plurality of functions of the first window, and
the transparent knob is configured to control the function of the first window corresponding to the function box when the user drags the function box to an inside of the transparent knob.

4. The automotive display control device of claim 2 or 3, wherein:
the transparent knob includes a central portion and a peripheral portion surrounding the central portion,
the central portion of the transparent knob is configured to display information on a function which the transparent knob is currently controlling, and
the peripheral portion of the transparent knob is configured to control of the function of the first window linked to the transparent knob touched by the user.

5. The automotive display control device of claim 4, wherein:
an edge of each of the central portion and the peripheral portion protrudes to guide a fingertip of the user to settle on the peripheral portion, and
the transparent knob is configured to be manipulated when the fingertip of the user is dragged along the peripheral portion while the fingertip of the user settles on the peripheral portion.

6. The automotive display control device of any one of claims 2 to 5, wherein:
the first window displayed on the display extends to both ends of the display in a width direction,
the display is configured to adjust the size of the first window in response to sensing an action by the user of dragging an upper or lower edge of the first window, and
the knob activation area partially overlaps a portion at which the transparent knob is located and extends to both ends of the display in the width direction.

7. The automotive display control device of any one of claims 2 to 6, wherein:
the transparent knob is linked to the first window when the first window completely covers the knob activation area by adjusting the size of the first window, and
the display is configured to restore the first window to a state before the size of the first window was adjusted when the first window partially covers the knob activation area.

8. The automotive display control device of any one of claims 2 to 7, wherein the display is configured to provide a haptic response to the user when the first window covers the knob activation area by adjusting the size of the first window.

9. The automotive display control device of any one of claims 4 to 8, wherein:
the first window is configured to display information on an air conditioning mode of a vehicle, and
the display is configured to allow the user to adjust a temperature, direction, or volume of air through manipulating the peripheral portion when the first window and the transparent knob are linked to each other.

10. The automotive display control device of any one of claims 4 to 9, wherein:
the first window is configured to display information on media, and
the display is configured to allow the user to adjust a sound effect or image effect through manipulating the peripheral portion when the first window and the transparent knob are linked to each other.
